# EUROPÄISCHE PATENTSCHRIFT

(11) **EP 3 350 422 B1**
(45) Veröffentlichungstag und Bekanntmachung des Hinweises auf die Patenterteilung: **17.07.2019**
(21) Anmeldenummer: 16760679.7
(22) Anmeldetag: 25.08.2016
(51) Int. Cl.: F01L 13/00, F01L 1/047

(54) **VERSCHIEBEELEMENT ZUM VERSCHIEBEN EINES NOCKENSEGMENTES**
SLIDING SLEEVE FOR DISPLACING A CAM ELEMENT
BAGUE COULISSANTE POUR DÉPLACER UNE CAME

(30) Priorität: 17.09.2015 DE 102015217886
(43) Veröffentlichungstag der Anmeldung: 25.07.2018
(73) Patentinhaber: ThyssenKrupp Presta TecCenter AG, 9492 Eschen (LI); thyssenkrupp AG, 45143 Essen (DE)
(72) Erfinder: SIEGEL, Kay, 08396 Waldenburg (DE)
(74) Vertreter: thyssenkrupp Intellectual Property GmbH
(86) Internationale Anmeldenummer: PCT/EP2016/070046
(87) Internationale Veröffentlichungsnummer: WO 2017/045890

(56) Entgegenhaltungen:
- DE-A1-102012 212 732
- DE-A1-102012 222 370
- DE-A1-102013 108 027
- DE-A1-102013 218 181

## Beschreibung

Die vorliegende Erfindung betrifft ein Verschiebeelement sowie ein Verschiebesystem zum Verschieben eines Nockensegmentes entlang einer Wellenlängsachse eines Wellensegmentes einer Nockenwelle. Ferner betrifft die Erfindung eine Nockenwelle zum Betätigen von Ventilen einer Brennkraftmaschine, wobei die Nockenwelle wenigstens ein Wellensegment, ein entlang einer Wellenachse des Wellensegmentes verschiebbares Nockensegment und ein Verschiebeelement zum Verschieben des Nockensegmentes aufweist.

Grundlegend ist bekannt, dass Nockenwellen den Gaswechsel und damit die Verbrennung eines Verbrennungsmotors eines Kraftfahrzeuges steuern. Sie werden von der Kurbelwelle angetrieben. Ihre Drehbewegung steht folglich in einem genau definierten Verhältnis zur Drehbewegung der Kurbelwelle und damit zur Position der Kolben in den Zylindern. Zur variablen Ventilsteuerung des Verbrennungsmotors ist es grundlegend bekannt, die Nockensegmente der Nockenwelle derart axial entlang des Wellensegmentes der Nockenwelle zu verschieben, dass unterschiedliche Nockenbahnen in Eingriff mit beispielsweise einem Schlepphebel gelangen, um unterschiedliche Ventilhübe auszulösen. So ist es des Weiteren als grundlegend bekannt anzusehen, dass ein Nockensegment beispielsweise wenigstens zwei axial nebeneinander angeordnete Nockenbahnen aufweist, wobei es auch denkbar ist, dass ein Nockensegment mehr als zwei Nockenbahnen, vorteilhaft drei Nockenbahnen aufweist, wobei zumindest eine der Nockenbahnen einen Nullhub ermöglicht. Um die Nockensegmente axial entlang des Wellensegmentes der Nockenwelle zu verschieben, dient folglich ein Verschiebeelement, welches bekannter Weise eine Nut aufweist, in die ein Stiftelement, beispielsweise eines Aktuators aufnehmbar ist. Während der axialen Verschiebung des Nockensegmentes bzw. des Nockenstückes mittels des Aktuators mit einem bekannter Weise pinförmigen Stift, kommt es nachteilig zu einem Verschleiß des Stiftes, welcher die Wandung der Führungsnut des Verschiebeelementes kontaktiert. Beim Eintauchen des Stiftes in die Führungsnut bzw. Verstellnut des Nockensegmentes ist der Stift unbeweglich, das bedeutet in Ruhe. Bei einem Kontakt des Stiftes mit der Führungsnut, insbesondere einer Wandung der Führungsnut besteht dadurch eine Differenzgeschwindigkeit zwischen der Nutkontur bzw. der Führungsnut und dem Stift, aufgrund welcher ein erhöhter Verschleiß zumindest am Stift oder auch an der Führungsnutkontur bewirkt wird.

Aus der DE 10 2012 222370 A1 ist ein Verschiebeelement zum Verschieben eines Nockensegmentes entlang einer Wellenlängsachse eines Wellensegmentes einer Nockenwelle bekannt geworden, wobei das Verschiebeelement eine Führungsnut zur Führung eines Eingriffselementes aufweist, welche sich zumindest abschnittsweise entlang einer äußeren Umfangsfläche der Verschiebeelementes erstreckt.

DE 1020 12212732 A1 offenbart eine Schiebenockensystem für Hubkolbenbrennkraftmaschinen mit Schiebenocken, die auf einer an der Brennkraftmaschine gelagerten Grundwelle drehfest aber axial verschiebbar angeordnet sind, mit einer Aktorvorrichtung, die zumindest einen aus einem Gehäuse heraus bewegbaren Aktorstift aufweist, wobei die Aktorvorrichtung an einem Bauteil eines Zylinderkopfes oder an dem Zylinderkopf der Brennkraftmaschine befestigbar ist und der Aktorstift nach seiner Herausbewegung aus dem Gehäuse mit zumindest einer Flanke zumindest einer Verschiebenut der Schiebenocken in Verbindung tritt.

In der DE 10 2012 014 778 A1 ist beispielsweise ein Ventiltrieb aufgezeigt, welcher eine Nockenwelle und zumindest zwei Nockenträger umfasst. Eine Längsverzahnung des Nockenträgers greift in eine korrespondierende Außenverzahnung der Nockenwelle derart ein, dass eine Längsverschiebung des Nockenträgers auf der Nockenwelle ermöglicht ist, während gleichzeitig in Umfangsrichtung eine drehfeste Verbindung erfolgt. Der Nockenträgers selbst besitzt mehrere unterschiedliche Nockenabschnitte mit unterschiedlichen Nockenkonturen welche verschiedene Betätigungscharakteristiken für die Gaswechselventile bewirken. An diesen Nockenkonturen greifen, wie bereits aus dem allgemeinen Stand der Technik bekannt, Abnehmer bzw. Nockenfolger, wie zum Beispiel Schlepphebel an, welche die vorgesehenen Gaswechselventile betätigen. Vorteilhaft lassen sich durch die verschiedenen Betätigungscharakteristiken der Gaswechselventile je nach Leistungsbedarf der Brennkraftmaschine unterschiedliche Ventilhübe einstellen, die mit einem Hubventil in Wirkverbindung stehen. Die unterschiedlichen Nockenkonturen werden mittels des axialen Verschiebens des Nockenträgers auf der Nockenwelle zwischen mindestens zwei Endpositionen eingestellt. Die Verschiebung des Nockenträgers selbst wird durch einen Aktuator ausgelöst, welcher beispielsweise elektrisch betätigbar ist. Ein Pin des Aktuators greift folglich in die Nutkontur des Nockenträgers ein, welcher sich in um die Längsachse der Nockenwelle rotierend bewegt, so dass dadurch eine Verschiebung des Nockenträgers in axialer Richtung ermöglicht wird. Bei dem Kontakt des Pins mit der Wandung der Nutkontur wird aufgrund der Differenzgeschwindigkeit zwischen der Nutkontur du dem Pin ein Verschleiß des Pins begünstig. Hierdurch erfolgt an der Umfangswandung des Pins eine Abtragung des Pinmaterials derart, dass zwischen dem Pin des Aktuators und der Nutkonturwandung ein ungewolltes Spiel entsteht bzw. derart vergrößert wird, dass eine prozesssichere Führung des Pins innerhalb der Nutkontur der Führungsnut nicht mehr gewährleistet ist.

In der DE 10 2009 008 422 A1 ist eine Ventiltriebumschaltvorrichtung mit einer Koppeleinheit aufgezeigt. Die Ventiltriebumschaltvorrichtung weist zumindest ein Schaltankerelement, welches für eine Schaltbewegung vorgesehen ist und ein Schaltelement, das für eine Kopplung mit einer Schaltkulisse eines Nockenelementes vorgesehen ist, auf. Das Schaltelement ist zumindest teilweise als Gleitschuh ausgebildet. Das Schaltankerelement selbst ist zumindest teilweise als Schaltpin ausgebildet. Die Betätigungsvorrichtung der Ventiltriebumschaltvorrichtung weist eine Schalteinheit mit einem Betätigungsaktuators und einer Schaltkulisse mit wenigstens einer Kulissenbahn auf. Der Betätigungsaktuators umfasst das Schaltankerelement sowie das Schaltelement. In einer Schaltstellung, in welcher das Schaltankerelement ausgefahren ist, greift das Schaltelement in die Schaltkulisse ein, wodurch eine Drehbewegung des Nockenelementes in die axial wirkende Schaltkraft bereitgestellt wird. Mittels einer Koppeleinheit sind das Schaltankerelement und das Schaltelement in drei Freiheitsgraden beweglich zueinander gekoppelt. Die drei Freiheitsgrade sind als voneinander unabhängige Drehbewegungen zwischen dem Schaltankerelement und dem Schaltelement ausgebildet. Das als Gleitschuh ausgebildete Schaltelement weist eine rotationsasymmetrische Grundform mit zwei Funktionsflächen auf, welche als Teile von einer Seitenfläche des Schaltelementes ausgebildet sind. Die Funktionsflächen sind als Berührungsflächen zwischen dem Schaltelement und Flanken der Kulissenbahn ausgebildet, die einem permanenten Abrieb und Verschleiß bei einem Eingreifen des Schaltelementes in der Kulissenbahn ausgesetzt sind. Hierdurch besteht die Möglichkeit des Abriebes der Funktionsflächen des Schaltelementes und der Flanken der Kulissenbahn derart, dass wiederum ein unerwünschtes Spiel zwischen der Kulissenbahn und dem Schaltelement auftreten kann.

Es ist daher die Aufgabe der vorliegenden Erfindung die voranstehend beschriebenen Nachteile bei einem Verschiebeelement, insbesondere einem Verschiebesystem bzw. Ventiltrieb zum Verschieben eines Nockensegmentes entlang einer Wellenlängsachse eines Wellensegmentes einer Nockenwelle zumindest teilweise zu beheben. Insbesondere ist es die Aufgabe der vorliegenden Erfindung ein Verschiebeelement, ein Verschiebesystem und eine Nockenwelle zum Betätigen von Ventilen einer Brennkraftmaschine zu schaffen, die auf eine einfache und kostengünstige Art und Weise eine Verschiebung des Nockensegmentes entlang der Längsachse der Nockenwelle ermöglichen, wobei das ungewollte Auftreten eines Spiel erzeugenden Spaltes zwischen der Führungsnutwandung und dem Eingriffselement, welches in die Führungsnut eingreift, zu vermeiden ist.

Die voranstehende Aufgabe wird gelöst durch ein Verschiebeelement zum Verschieben eines Nockensegmentes entlang einer Wellenlängsachse eines Wellensegmentes einer Nockenwelle mit den Merkmalen gemäß Anspruch 1 sowie durch ein Verschiebesystem zum Verschieben eines Nockensegmentes entlang einer Wellenlängsachse eines Wellensegmentes einer Nockenwelle mit den Merkmalen gemäß Anspruch 9. Ferner wird die voranstehende Aufgabe gelöst mittels einer Nockenwelle zum Betätigen von Ventilen einer Brennkraftmaschine mit den Merkmalen gemäß Anspruch 10. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verschiebeelement beschrieben sind selbstverständlich auch im Zusammenhang mit dem erfindungsgemäßen Verschiebesystem und/oder mit der erfindungsgemäßen Nockenwelle und jeweils umgekehrt, sodass bezüglich der Offenbarung zu den einzelnen Erfindungsaspekten stets wechselseitig Bezug genommen wird bzw. werden kann.

Das erfindungsgemäße Verschiebeelement zum Verschieben eines Nockensegmentes entlang einer Wellenlängsachse eines Wellensegmentes einer Nockenwelle weist eine Führungsnut zur Führung eines Eingriffselementes auf, welche sich zumindest abschnittsweise entlang einer äußeren Umfangsfläche des Verschiebeelementes erstreckt. Die Führungsnut weist wenigstens einen Bewirkungsabschnitt zum Bewirken eine Drehbewegung des Eingriffselementes um dessen Drehachse auf, welche sich orthogonal zu einer Drehachse des Verschiebeelementes erstreckt. Erfindungsgemäß weist der Bewirkungsabschnitt ein Kontaktelement zur exzentrischen Kontaktierung des Eingriffselementes auf. Das Wellensegment weist wenigstens einen Wellenkörper auf, welcher beispielsweise als Hohlwelle oder als Vollwelle ausgestaltet ist. Es ist des Weiteren denkbar, dass das an dem Wellenkörper Flansche bzw. Endstücke zum Anordnen von beispielsweise einer Antriebswelle oder anderweitigen Anbauteilen angeordnet sind. Vorteilhaft ist das Verschiebeelement beispielsweise hülsenförmig mit einer Durchgangsbohrung ausgestaltet, durch welche das Wellensegment der Nockenwelle hindurchführbar ist. Das Nockensegment weist zumindest eine Nockenbahn, vorteilhaft auch zwei oder mehr als zwei Nockenbahnen zur Betätigung der Einlassventile oder Auslassventile eines Verbrennungsmotors auf. Das Eingriffselement ist beispielsweise stiftförmigen bzw. pinförmig ausgestaltet und greift zumindest teilweise in die Führungsnut des Verschiebeelementes ein. Das Eingriffselement ist beispielsweise ein Bestandteil eines Aktuators, wie beispielsweise eines elektromagnetischen Aktuators. Der Aktuators weist beispielsweise eine Elektromagneteinheit mit einer Statoreinheit und einer Ankereinheit auf. Die Statoreinheit umfasst dabei eine Spule und einen Spulenkern, mittels welchem ein mittels der Spule erzeugtes Magnetfeld verstärkt wird. Die Ankereinheit selbst umfasst beispielsweise einen Permanentmagneten, welcher mit dem Pin verbunden ist. Der Bewirkungsabschnitt der Führungsnut ist vorteilhaft ein Bereich bzw. Abschnitt bzw. Sektor in welchem eine Drehbewegung des Eingriffselementes erzeugt bzw. verursacht wird. Vorteilhaft wird aufgrund einer Drehung des Eingriffselementes innerhalb der Führungsnut um dessen Drehachse eine Reibung zwischen der Nutkontur und der äußeren Oberfläche des Eingriffselementes minimiert. Demzufolge wird die Drehung des Eingriffselementes vorteilhaft aufgrund des Kontaktes des Eingriffselementes mit dem Kontaktelement des Bewirkungsabschnittes herbeigeführt. Das Kontaktelement des Bewirkungsabschnittes ist beispielsweise ein Element oder Abschnitt oder eine Oberfläche, welches vorteilhaft in direkten Kontakt mit einer Oberfläche des Eingriffselementes steht - zumindest zeitweise und insbesondere dann, wenn das Eingriffselement in die Führungsnut eingefahren wird. Vorteilhaft ist das Kontaktelement demnach ein Bestandteil des Bewirkungsabschnittes. Besonders vorteilhaft weist das Kontaktelement ein abriebfestes Material oder eine abriebfeste Beschichtung auf. Es ist auch denkbar, dass das Kontaktelement ein Material aufweist, welches dem Material des Verschiebeelementes entspricht. Vorteilhaft wird durch die Anordnung des Kontaktelementes im Bewirkungsabschnitt der Führungsnut eine exzentrische Kontaktierung des Eingriffselementes mittels des Kontaktelementes ermöglicht. Exzentrisch bedeutet im Rahmen der Erfindung eine Kontaktierung außerhalb des Bereiches der zentrischen Drehachse des Eingriffselementes. Dank dieser exzentrischen Kontaktierung des Eingriffselementes wird zum einen die Drehbewegung des Eingriffselementes ermöglicht. Zum anderen wird vorteilhaft ein möglicher Abrieb des Materials des Eingriffselementes, aufgrund eines beispielsweise entstehenden Schlupfes zwischen dem Eingriffselement und der Führungsnutkontur während der Beschleunigung des Eingriffselementes auf eine erforderliche Drehgeschwindigkeit, in einen unkritischen Bereich des Eingriffselementes verlagert. Als unkritischer Bereich wird im Rahmen der Erfindung ein Bereich bzw. Abschnitt des Eingriffselementes verstanden, welcher trotz eines Materialabriebes kein ungewolltes Spiel zwischen der Umfangswandung des Eingriffselementes und der Wandung, insbesondere Seitenwandung der Führungsnut ermöglicht. Vorteilhaft wird folglich die Drehung des Eingriffselementes nicht mittels eines Kontaktes zwischen dem Eingriffselement und einer Wandung, insbesondere einer Seitenwandung der Führungsnutkontur herbeigeführt, sondern mittels eines Kontaktes zwischen einem distalen Ende bzw. einem distalen Endbereich des Eingriffselementes und dem Kontaktelement des Bewirkungsabschnittes. Hierdurch wird vorteilhaft eine Differenzgeschwindigkeit zwischen den Reibpartnern, sprich dem Eingriffselement und dem Kontaktelement, insbesondere der Führungsnut minimiert, sodass ein Verschleiß des Kontaktelementes bzw. der Führungsnut sowie auch des Eingriffselementes vorteilhaft minimiert, bestenfalls verhindert wird.

Es ist des Weiteren denkbar, dass der Bewirkungsabschnitt zumindest abschnittsweise in einem Eintrittssektor der Führungsnut, in welchem das Eingriffselement in die Führungsnut einbringbar ist, ausgebildet ist. Vorteilhaft erstreckt sich demnach der Bewirkungsabschnitt zumindest abschnittsweise innerhalb des Eintrittssektors bzw. bis in diesen Eintrittssektor hinein. Es ist des Weiteren denkbar, dass der Bewirkungsabschnitt vorteilhaft vollständig innerhalb des Eintrittssektors ausgebildet ist.

Im Rahmen der Erfindung ist es des Weiteren denkbar, dass der Bewirkungsabschnitt zumindest abschnittsweise in einem Verstellsektor der Führungsnut, in welchem die Führungsnut eine Abweichung der Verlaufsrichtung aufweist, ausgebildet ist. Demzufolge erstreckt sich der Bewirkungsabschnitt zumindest abschnittsweise innerhalb des Verstelltsektors bzw. bis in den Verstellsektor hinein. Es ist des Weiteren möglich, dass der Bewirkungsabschnitt sich vorteilhaft vollständig innerhalb des Verstelltsektors ausbildet. Der Verstelltsektors ist demzufolge vorteilhaft ein Abschnitt, in welchem die Führungsnutkontur keinen geradlinigen Verlauf in Umfangsrichtung aufweist.

Zudem ist es denkbar, dass der Bewirkungsabschnitt zumindest abschnittsweise in einem Einlaufsektor der Führungsnut, in welchem eine kontinuierliche Erhöhung einer Nutgrundtiefe der Führungsnut erfolgt, ausgebildet ist. Demnach erstreckt sich der Bewirkungsabschnitt zumindest abschnittsweise innerhalb des Einlaufsektors bzw. bis in den Einlaufsektor hinein. Vorteilhaft ist der Bewirkungsabschnitt vollständig in dem Einlaufsektor ausgebildet. Der Einlaufsektor ist demzufolge ein Bereich der Führungsnut, in welchem ein Abfall eines Nutgrundes der Führungsnut ausgehend von einem Grundkreisniveau des Verschiebeelementes bis zu einer definierten Nutgrundtiefe der Führungsnut erfolgt. Der Einlaufsektor bzw. auch ein in der Führungsnut ausgebildeter Auslaufsektor werden vorteilhaft gebildet, wenn die Führungsnut in die Oberfläche bzw. das Material des Verschiebeelementes eingebracht wird. Der Einlaufsektor ist der Anfangsbereich der Führungsnut, während der Auslaufsektor den Endbereich der Führungsnut ausbildet, sofern die Führungsnut nicht vollumfänglich in der Umfangswandung des Verschiebeelementes ausgebildet ist. Vorteilhaft ist es denkbar den Bewirkungsabschnitt zumindest abschnittsweise in dem Einlaufsektor auszubilden, insbesondere wenn eine ausreichend lange Kontaktzeit zwischen dem Eingriffselement und dem Kontaktelement erforderlich ist. Dies ist beispielsweise der Fall, wenn bei hohen Drehzahlen der Nockenwelle und folglich des Verschiebelementes die Kontaktzeit des Eingriffselementes und der Nutkontur, insbesondere dem drehmomentauslösenden Bereich zum Erzeugen einer Drehbewegung des Eingriffselementes sehr kurz ist. Folglich wird der Einlaufbereich als Eintrittsbereich für das Eingriffselement derart genutzt, dass das Kontaktelement bereits hier in direktem Kontakt mit dem Eingriffselement gelangt - vorteilhaft noch bevor das Eingriffselement bis in die Führungsnut, insbesondere bis zum Führungsnutgrund der Führungsnut eingebracht wurde.

Es ist des Weiteren denkbar, dass die Führungsnut eine U-förmige Führungsnutkontur aufweist, wobei das Kontaktelement an einer Wandung der Führungsnut ausgebildet ist. Vorteilhaft ist die Wandung eine Seitenwandung bzw. ein U-Schenkel der Führungsnutkontur oder auch der Nutgrund der Führungsnutkontur. Vorteilhaft ist das Kontaktelement als Vorsprung oder Materialaufwerfung ausgebildet, welches sich ausgehend von einer Wandung, wie einer Seitenwandung oder dem Nutgrund der Führungsnutkontur in diese Führungsnut Kontur Führungsnutkontur hinein erstreckt. Vorteilhaft erstreckt sich das Kontaktelement derart, dass das Eingriffselement - zumindest im Bewirkungsabschnitt - keine direkte Kontaktierung mit einer der Seitenwandungen der Führungsnutkontur oder dem Nutgrund der Führungsnutkontur erfährt. Es ist auch denkbar, dass das Kontaktelement aufgrund einer Ausbildung einer Aussparung oder Ausnehmung oder Vertiefung im Nutgrund erzeugt ist.

Es ist des Weiteren möglich, dass das Kontaktelement eine Materialaufwerfung ist, welche sich zumindest abschnittsweise asymmetrisch zum Führungsnutgrund innerhalb einer Führungsnutkontur der Führungsnut erstreckt. Demzufolge ist es denkbar, dass das Kontaktelement die Führungsnutkontur beispielsweise derart teilt bzw. durchsetzt, und zwar in beliebiger Weise, um eine Kontaktoberfläche - abweichend zum Nutgrund und zu wenigstens einer Seitenwandung der Nutkontur - zum Eingriffselement zu bilden.

Es ist denkbar, dass die Führungsnut Y-förmig, S-förmig, Doppel-S-Förmig oder XS-förmig ausgebildet ist. Demzufolge erstreckt sich die Führungsnut in beliebiger Form in Umfangsrichtung um das Verschiebeelement. Es ist des Weiteren denkbar, dass das Verschiebeelement auch mehr als eine Führungsnut, insbesondere zwei Führungsnuten aufweist. Hierbei ist es möglich, dass eine erste Führungsnut für eine Bewegung des Verschiebeelementes und des damit wird verbundenen Nockensegmentes in eine erste Richtung, und eine weitere Führungsnut für eine Bewegung des Verschiebeelementes und des damit verbundenen Nockensegmente in eine der ersten Richtung entgegengesetzten Richtung dienen.

Es ist denkbar, dass das Schiebeelement mittels einer Führungshülse mit dem Nockensegment wirkverbunden ist. Die Führungshülse ist dabei vorteilhaft ein Tragelement, welches dazu dient das Verschiebeelement und das Nockensegment verdrehfest miteinander zu verbinden bzw. aufzunehmen. Vorteilhaft erfolgt die Drehmomentübertragung ausgehend vom Verschiebeelement auf die Führungshülse und von dort auf das Nockensegment. Es ist denkbar, dass das Verschiebeelement und das Nockensegment in Wellenlängsachsenrichtung betrachtet axial nebeneinander auf der Führungshülse angeordnet sind. Vorteilhaft sind das Schiebeelement sowie auch das Nockensegment verdrehfest mit der Führungshülse verbunden bzw. auf dieser Führungshülse aufgeschrumpft oder aufgepresst.

Es ist des Weiteren ein Verschiebesystem zum Verschieben eines Nockensegment einer Nockenwelle beansprucht, wobei das Verschiebesystem wenigstens ein Verschiebeelement gemäß der oben genannten Art sowie ein Eingriffselement zum Eingreifen in die Führungsnut des Verschiebeelementes aufweist, wobei das Eingriffselement um dessen Längsachse drehbar ausgestaltet ist. Vorteilhaft ist das Eingriffselement ein Bestandteil eines Aktuators. Vorteilhaft wird das Drehmoment des Eingriffselementes mittels des Kontaktelementes des Bewirkungsabschnittes erzeugt. Die Längsachse des Eingriffselementes ist im Wesentlichen orthogonal zu der Längsachse des Verschiebeelementes ausgebildet, sodass vorteilhaft das Eingriffselement entlang dessen Längsachse in die Führungsnut einbringbar ist. Beim Einbringen des Eingriffselementes in die Führungsnut bzw. beim Herausbewegen des Eingriffselementes aus der Führungsnut wird das Eingriffselement translatorisch entlang dessen Längsachse bewegt. Das Eingriffselement trifft beim Einbringen in die Führungsnut dezentral auf das Kontaktelement im Bewirkungsabschnitt, welcher beispielsweise im Einlaufsektor, Eintrittssektor oder Verstellsektor der Führungsnut ausgebildet ist. Bei dem erfindungsgemäßen Verschiebesystem ergeben sich sämtliche Vorteile die bereits zu einem Verschiebeelement gemäß dem ersten Aspekt Erfindung beschrieben worden sind.

Es ist des Weiteren eine Nockenwelle zum Betätigen von Ventilen einer Brennkraftmaschine beansprucht, wobei die Nockenwelle wenigstens ein Wellensegment, ein entlang einer Wellenachse des Wellensegmentes verschiebbares Nockensegment und ein Verschiebeelement zum Verschieben des Nockensegmentes aufweist. Das Verschiebeelement weist eine Führungsnut zur Aufnahme eines Eingriffselementes auf. Die Führungsnut erstreckt sich zumindest abschnittsweise entlang einer äußeren Umfangsfläche des Verschiebeelementes und weist einen Bewirkungsabschnitt zum Bewirken einer Drehbewegung des Eingriffselementes um dessen Drehachse auf, welche sich orthogonal zu einer Drehachse des Verschiebeelementes erstreckt. Der Bewirkungsabschnitt weist eine Kontaktfläche zur exzentrischen Kontaktierung des Eingriffselementes auf. Vorteilhaft sind das Nockensegment und das Verschiebeelement miteinander wirkverbunden. Es ist denkbar, dass das Nockensegment und das Verschiebeelement ein und dasselbe Element sind, sodass beispielsweise die Führungsbahn des Verschiebeelementes seitlich, das bedeutet axial beabstandet, zu den Nockenbahnen des Nockensegmentes ausgebildet ist. Es ist des Weiteren denkbar, dass das Nockensegment und das Verschiebeelement über ein weiteres Element, wie insbesondere eine Führungshülse, miteinander verbunden sind.

Bei der beschriebenen Nockenwelle ergeben sich sämtliche Vorteile die bereits zu einem Verschiebeelement gemäß dem ersten Aspekt der Erfindung oder einem Verschiebesystem gemäß dem zweiten Aspekt Erfindung beschrieben worden sind.

Ausführungsformen eines erfindungsgemäßen Verschiebeelementes, eines erfindungsgemäßen Verschiebesysteme sowie einer erfindungsgemäßen Nockenwelle werden nachfolgend anhand von Zeichnungen näher erläutert. Es zeigen jeweils schematisch:
- Figur 1: in einer Seitenansicht eine Ausführungsform einer erfindungsgemäßen Nockenwelle,
- Figur 2: in einer Draufsicht eine entfaltete Ausführungsform eines erfindungsgemäßen Verschiebeelementes,
- Figur 3: in einer Draufsicht eine Ausführungsform eines erfindungsgemäßen Verschiebeelementes mit einer Führungsnut mit Bewirkungsabschnitt,
- Figur 4: in einer seitlichen Schnittdarstellung die in der Figur 3 gezeigte Ausführungsform eines erfindungsgemäßen Verschiebeelementes,
- Figur 5: in einer seitlichen Schnittdarstellung ein aus dem grundlegenden Stand der Technik bekanntes Verschiebeelement, und
- Figur 6: in einer seitlichen Schnittdarstellung eine weitere Ausführungsform eines erfindungsgemäßen Verschiebeelementes.

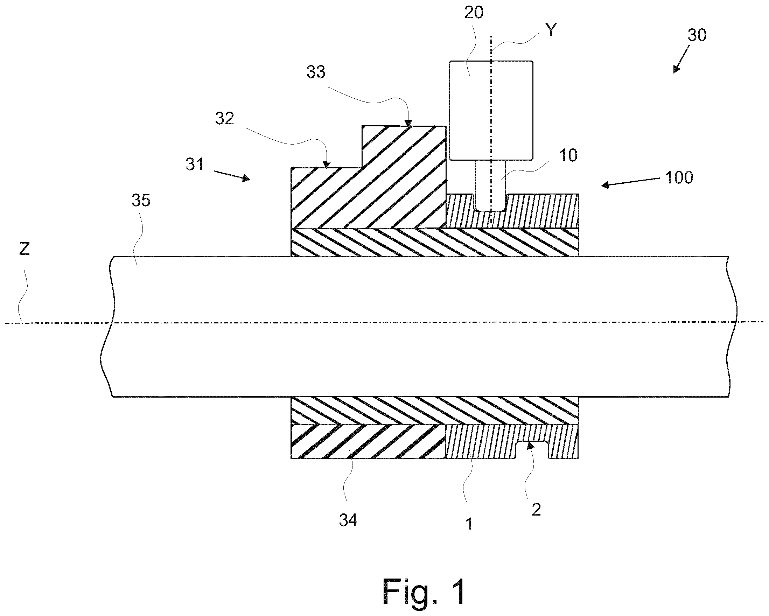

Elemente mit gleicher Funktion und Wirkungsweise sind in den Figuren 1 bis 6 mit jeweils denselben Bezugszeichen versehen.

In der Figur 1 ist in einer seitlichen Schnittdarstellung eine Ausführungsform einer erfindungsgemäßen Nockenwelle 30 gezeigt. Die Nockenwelle 30 weist ein Wellensegment 35 auf, welches sich in axialer Richtung entlang der Drehachse X durch eine entsprechende Öffnung einer Führungshülse 34 erstreckt. Die Führungshülse 34 erstreckt sich ebenfalls in axialer Richtung entlang der Drehachse X vorteilhaft durch Durchgangsöffnungen eines Nockensegmentes 31 und eines Verschiebeelementes 1, welches ein Bestandteil eines Verschiebesystems 100 ist. Vorteilhaft verbindet die Führungshülse 34 das Nockensegment 31 sowie das Verschiebeelement 1 miteinander - direkt oder indirekt. Vorteilhaft ist das Nockensegment 31 und/oder das Schiebeelement 1 kraftschlüssig oder auch formschlüssig oder auch kraft- und formschlüssig mit der Führungshülse 34 verbunden. Demnach ist es denkbar, dass das Nockensegment 31 und/oder das Verschiebeelement 1 auf der Führungshülse 34 aufgepresst oder aufgeschrumpft sind. Das Nockensegment 31 weist eine erste Nockenbahn 32 sowie eine zweite Nockenbahn 33 auf. Das Nockensegment 31 und das Verschiebeelement 1 sind in axialer Richtung nebeneinander angeordnet. Das Verschiebeelement 1 weist zudem eine Führungsnut 2 auf, welche sich in Umfangsrichtung des Verschiebeelementes 1 erstreckt. In die Führungsnut 2 greift ein Eingriffselement 10 eines Aktuators 20 ein. Das Eingriffselement 10 erstreckt sich entlang der Längsachse Y des Aktuators 20. Vorteilhaft wird bei einer Kontaktierung des Eingriffselementes 10 mit dem Führungsnutgrund, insbesondere einem nicht näher dargestellten Kontaktelement im Führungsnutgrund eine Drehung des Eingriffselementes 10 um dessen Längsachse Y bewirkt. Demzufolge ist die Längsachse Y gleichzeitig die Drehachse des Eingriffselementes 10, welche im Wesentlichen orthogonal zur Drehachse X der Nockenwelle 30, insbesondere des Wellensegmentes 35 der Nockenwelle 30 ausgerichtet ist.

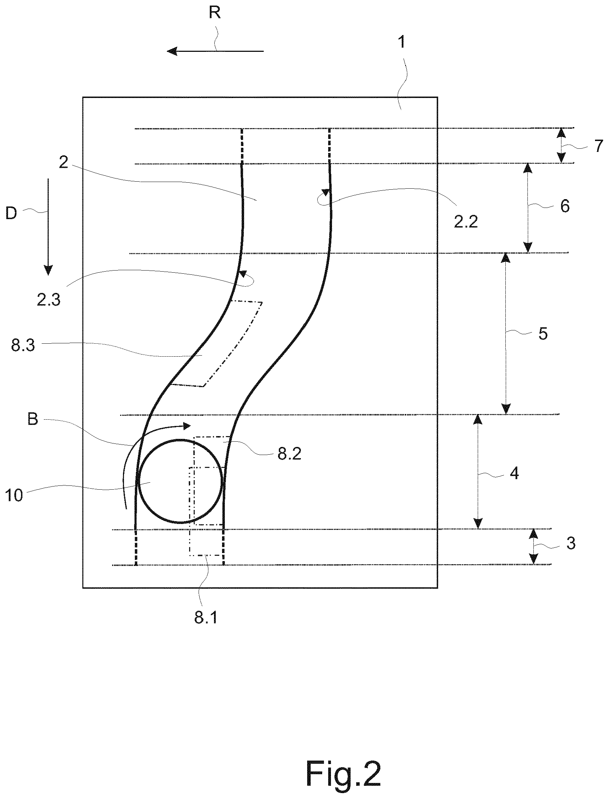

In der Figur 2 ist in einer Draufsicht eine entfaltete Ausführungsform eines erfindungsgemäßen Verschiebeelementes 1 gezeigt. Das Verschiebeelement 1 weist eine Führungsnut 2 auf, innerhalb welcher ein Eingriffselement 10 eingreift. In der Figur 2 ist des Weiteren ein Bewirkungsabschnitt 8.1, 8.2 und 8.3 gezeigt. Die Führungsnut 2 lässt sich in unterschiedliche Sektoren einteilen. Demnach besteht die Führungsnut 2 aus beispielsweise einem Einlaufsektor 3, einem Eintrittssektor 4, einem Verstellsektor 5, einem Austrittsektor 6 sowie dem Auslaufsektor 7. Der Einlaufsektor 3 wird erzeugt beim Einbringen der Führungsnut 2 in das Material des Verschiebeelementes 1. Der Einlaufsektor 3 ist vorteilhaft der Bereich, in welchem der Führungsnutgrund der Führungsnut ausgehend von einem Grundkreisniveau des Verschiebeelementes 1 bis auf eine definierte Nutgrundtiefe abfällt. Der Eintrittssektor 4 ist derjenige Bereich der Führungsnut 2, in welchem das Eingriffselement 10 in die Führungsnut 2 des Verschiebeelementes 1 eingebracht wird. Der Eintrittssektor 4 weist vorteilhaft einen geradlinigen Verlauf der Führungsnut 2 auf. Im Bereich des Eintrittssektors 4 weist die Führungsnut vorteilhaft eine identische Nutgrundtiefe auf, was vorteilhaft auch für den Verstellsektor 5 und den Austrittsektor 6 zutrifft. Der Verstellsektor 5 ist derjenige Bereich, in welchem die Führungsnutkontur der Führungsnut 2 eine Abweichung zur geradlinigen Führung in Umfangsrichtung des Verschiebeelementes 1 erfährt. Bei einer Bewegung des Verschiebeelementes 1 in Drehrichtung D des Verschiebeelementes 1 wird folglich das positionsfeste Eingriffselement 10 indirekt entlang der Führungsnut 2 - ausgehend vom Eintrittssektor 4 zum Verstellsektor 5 - bewegt. Bzw. die Führungsnut 2 wird in Bewegungsrichtung bzw. Drehrichtung D derart bewegt, dass das Eingriffselement 10 vom Eintrittssektor 4 in den Verstellsektor 5 gelangt. Aufgrund der Bewegung des Eingriffselementes 10 entlang der Führungsnut 2 innerhalb des Verstellsektors 5 erfolgt eine Verschiebebewegung des Verschiebeelementes 1 entlang der Drehachse X in axialer Richtung, das bedeutet in Verschieberichtung R. Bei einer Wirkverbindung zwischen einem Verschiebeelement 1 und einem hier nicht gezeigten Nockensegment wird folglich auch das mit dem Verschiebeelement 1 wirkverbundene Nockensegment 31 (vgl. Figur 1) in die Verschieberichtung R bewegt. Der Austrittsektor 6 der Führungsnut 2 ist insbesondere der Bereich, in welchem das Eingriffselement 10 aus der Führungsnut 2 heraus bewegt bzw. entfernt wird. Bei einem Einbringen bzw. Herausbewegen des Eingriffselementes in bzw. aus der Führungsnut 2 erfährt das Eingriffselement 10 vorteilhaft eine translatorischer bzw. geradlinige Bewegung, insbesondere in einer zur Verschieberichtung bzw. Drehrichtung D orthogonalen Richtung. Ein weiterer Sektor der Führungsnut 2 ist der Auslaufsektor 7. Im Bereich des Auslaufsektors 7 steigt der Führungsnutgrund der Führungsnut 2 wieder bis auf das Grundkreisniveau an. Zwischen den Bereich des Auslaufsektor 7 und des Einlaufsektors 3 ist vorteilhaft keine Führungsnut 2 ausgebildet, sodass der reine Grundkreis des Verschiebeelementes 1 vorliegt.

Wie in der Figur 2 erkennbar, ist es denkbar, dass ein Bewirkungsabschnitt 8.1 innerhalb des Eintrittssektors 4 sowie des Einlaufsektors 3 ausgebildet ist. Demzufolge ist es denkbar, dass sich ein Bewirkungsabschnitt 8.1 zumindest abschnittsweise entlang des Eintrittssektors 4 sowie ebenfalls zumindest abschnittsweise entlang des Einlaufsektors 3 erstreckt. Es ist des Weiteren möglich, dass ein Bewirkungsabschnitt 8.2 lediglich innerhalb des Eintrittssektors 4 ausgebildet ist. Ebenso ist es möglich, dass ein Bewirkungsabschnitt 8.3 im Verstellsektor 5 der Führungsnut 2 ausgebildet ist. Vorteilhaft ist wenigstens ein Bewirkungsabschnitt 8.2 im Eintrittssektor 4 oder im Eintrittssektor 4 und im Einlaufsektor 3 ausgebildet, während ein anderer Bewirkungsabschnitt 8.3 im Verstellsektor 5 ausgebildet ist. Bei einem Einbringen des Eingriffselementes 10 in die Führungsnut 2 im Bereich des Eintrittssektors 4 kontaktiert zumindest ein distales Ende des Eingriffselementes 10 ein hier nicht gezeigtes Kontaktelement des Bewirkungsabschnittes 8.1 bzw. 8.2, sodass dies zu einer Verursachung einer Drehbewegung des Eingriffselementes 10 in Bewegungsrichtung B des Eingriffselementes 10 führt. Es ist denkbar, dass die Umfangswandung des Eingriffselementes 10 eine Seitenwandung, beispielsweise die rechte Seitenwandung 2.2 der Führungsnut 2 während des Entlanglaufens des Eingriffselementes 10 innerhalb der Führungsnut 2 im Eintrittssektor 4 kontaktiert. Aufgrund der Drehbewegung des Eingriffselementes 10 in Bewegungsrichtung bzw. Drehrichtung B rollt das Eingriffselement 10 folglich an dieser Seitenwandung 2.2 ab. Bei einer fortlaufenden Bewegung des Verschiebeelementes 1 in Bewegungsrichtung D trifft folglich eine Umfangswandung des Eintrittselementes 10 auf eine Seitenwandung 2.3 der Führungsnut 2, sodass zur Vermeidung bzw. Reduzierung der Reibung und des Abriebes des Materials des Eingriffselementes 10 eine Änderung der Bewegungsrichtung des Eingriffselementes 10 erforderlich ist. Folglich ist vorteilhaft auch im Verstellsektor 5 der Führungsnut 2 ein Bewirkungsabschnitt 8.3 ausgebildet. Der weitere Bewirkungsabschnitt 8.3 führt vorteilhaft zu einem Abbremsen der Drehbewegung des Eingriffselementes 10 in Drehrichtung B sowie vorteilhaft auch zu einer Verursachung einer Drehung des Eingriffselementes 10 entgegen der Bewegungsrichtung B.

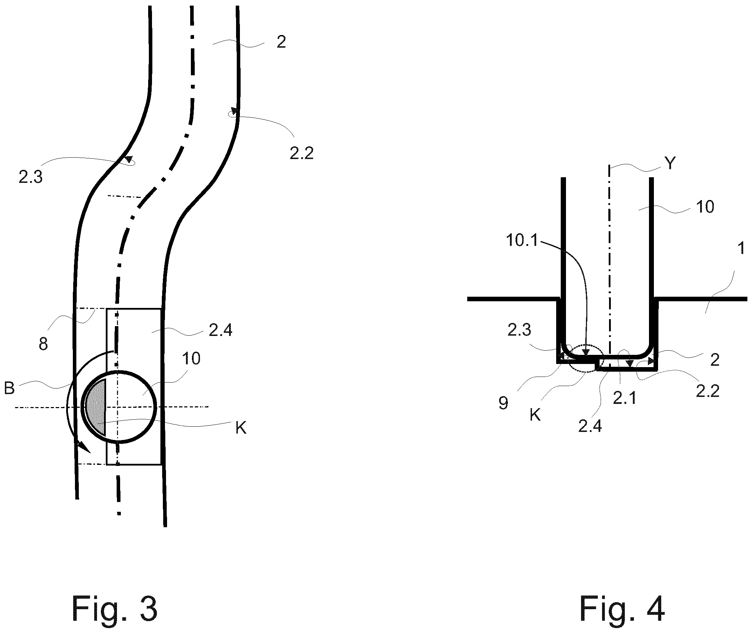

In der Figur 3 ist in einer Draufsicht eine ausgerollte bzw. aufgeklappte Führungsnut 2 einer Ausführungsform eines erfindungsgemäßen Verschiebeelementes gezeigt. Die Führungsnut zwei entspricht in ihrer Ausgestaltung im Wesentlichen der in der Figur 2 gezeigten Führungsnut 2 und ist demzufolge vorteilhaft S-förmig ausgestaltet. Die Führungsnut 2 weist einen Bewirkungsabschnitt 8 auf, welcher sich beispielsweise entlang des Eintrittssektors oder auch entlang des Einlaufsektors und des Eintrittssektors erstreckt. Im Gegensatz zu dem in der Figur 2 gezeigten Bewirkungsabschnittes 8.1 bzw. 8.2 ist der Bewirkungsabschnitt 8 der Figur 3 im linken Bereich der Führungsnut 2 ausgebildet. Insbesondere ist das hier nicht gezeigte Kontaktelement im linken Bereich bzw. in der linken Hälfte der Führungsnut 2 derart ausgebildet, dass eine Kontaktierung eines distalen Endes des Eingriffselementes 10 und des Kontaktelementes derart erfolgt, dass das Eingriffselement 10 in eine Bewegungsrichtung B beschleunigt wird. Dies wird insbesondere in der Figur 4 verdeutlicht, in welcher in einer seitlichen Schnittdarstellung die in der Figur 3 gezeigte Führungsnut 2 darstellt ist.

In der Figur 4 wird ersichtlich, dass das Kontaktelement 9 im linken Abschnitt bzw. der linken Hälfte der Führungsnut 2 ausgebildet ist. Vorteilhaft ist das Kontaktelement 9 mittels einer Materialerhebung oder mittels einer Aussparung 2.4 im Führungsnutgrund 2.1 erzeugt. Basierend auf der Anordnung des Kontaktelementes 9 im Bereich des Führungsnutgrundes 2.1 wird eine Kontaktfläche K zwischen einem distalen Ende 10.1 des Eingriffselementes 10 und dem Kontaktelement 9 gebildet, welche dezentral zum Eingriffselement 10 ausgebildet ist. Basierend auf der dezentralen Kontaktierung des Kontaktelementes 9 mit dem Eingriffselement 10 findet folglich zum einen das Auslösen der Drehbewegung des Eingriffselementes 10 in Bewegungsrichtung B statt. Zum anderen erfolgt lediglich ein Abrieb des Materials des Eingriffselementes 10 in einem dezentralen distalen Bereich des Eingriffselementes 10, welcher unkritisch, das bedeutet irrelevant für die Erhaltung der Führungsqualität des Eingriffselementes 10 innerhalb der Führungsnut 2 ist. Wie in der Figur 4 gezeigt, ist es denkbar, dass das Kontaktelement 9 in Gestalt eines Absatzes in der Führungsnutkontur 2.1 ausgebildet ist.

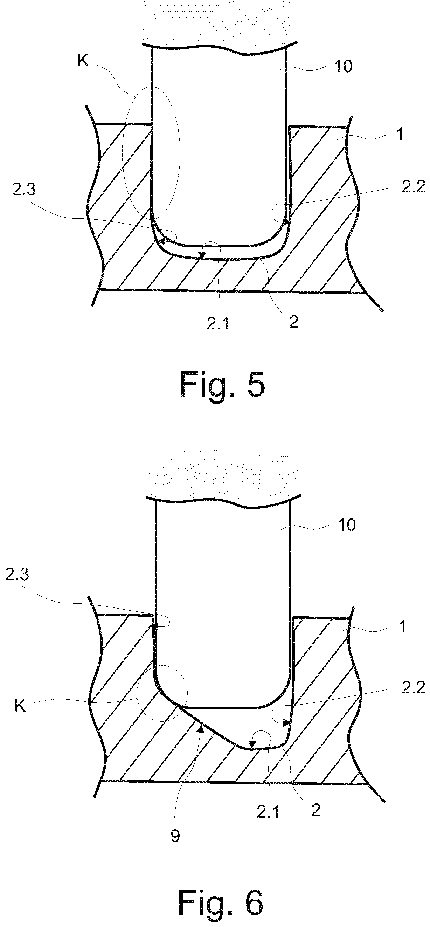

In der Figur 5 ist in einer seitlichen Schnittdarstellung ein Ausschnitt aus einer aus dem grundlegenden Stand der Technik bekannten Ausführungsform eines Verschiebeelementes 1 mit einer Führungsnut 2 gezeigt. Die Kontaktfläche K, welche sich zwischen einer Seitenwandung 2.3 der Führungsnut 2 sowie einer äußeren Oberfläche des Eingriffselementes 10 bildet, führt zu einem Abrieb bzw. einem Verschleiß des Eingriffselementes 10 genauso wie der Führungsnut 2 bzw. der Seitenwandung 2.3 der Führungsnut 2. Demzufolge ist es aus dem grundlegenden Stand der Technik bekannt, dass bei einem Einbringen eines Eingriffselementes 10 in eine Führungsnut 2, aufgrund der vergleichbaren Abmaße - um ein Spiel während der Bewegung des Verschiebeelementes 1 um dessen Drehachse zwischen dem Eingriffselement 10 und dem Verschiebeelement 1 zu vermeiden - eine direkte Kontaktierung zwischen einer äußeren Umfangswandung des Schiebeelementes 10 und wenigstens einer Seitenwandung 2.2 oder 2.3 der Führungsnut 2 erfolgt. Bei einer Kontaktierung des Eingriffselementes 10 und der Seitenwandung 2.2 oder 2.3 der Führungsnut 2 tritt aufgrund der vorherrschenden Differenzgeschwindigkeit zwischen dem Eingriffselement 10, welches noch keine Drehbewegung um dessen Längsachse Y erfährt, und dem in Bewegungsrichtung D bewegten Verschiebeelement 1 (vgl. Figur 2) während der Beschleunigungsphase des Eingriffselementes 10 auf die erforderliche Drehgeschwindigkeit ein Schlupf zwischen dem Eingriffselement 10 und der Führungsnutkontur auf. Dieser Schlupf führt wiederum zu einem Verschleiß an dem Eingriffselement 10 sowie an der Seitenwandung 2.2 bzw. 2.3 der Führungsnut 2. Aufgrund des fortschreitenden Verschleißes an dem Eingriffselement 10 sowie der Führungsnutkontur der Führungsnut 2 entsteht ein ungewolltes Spiel zwischen dem Eingriffselement 10 und der Führungsnutkontur, welches das Verschiebeverhalten des Verschiebeelementes 1 und somit die Schaltung der einzelnen Ventile des Verbrennungsmotors negativ beeinflusst.

In der Figur 6 ist in einer seitlichen Schnittdarstellung ein Ausschnitt aus einer Ausführungsform eines erfindungsgemäßen Verschiebeelementes 1 aufgezeigt. Im Vergleich zu dem aus dem bekannten Stand der Technik dargestellten Verschiebeelement 1 gemäß der Figur 5 weist das in der Figur 6 gezeigte Verschiebeelement 1 eine Führungsnut 2 auf, welche eine unveränderte Seitenwandung 2.2 sowie eine Seitenwandung 2.3 und einen Führungsnutgrund 2.1 aufweist, zwischen denen sich ein Kontaktelement 9 erstreckt. Vorteilhaft befinden sich die Seitenwandungen 2.2 und 2.3 sowie der Führungsnutgrund 2.1 nicht in direktem Kontakt mit einer Oberfläche des Eingriffselementes 10. Das Kontaktelement 9 ist vorteilhaft derart ausgebildet, dass dieses sich im Wesentlichen asymmetrisch zumindest zum Führungsnutgrund 2.1 oder zur Seitenwandung 2.3 der Führungsnut 2 erstreckt. Vorteilhaft ist das Kontaktelement 9 als Materialaufwerfung ausgestaltet und erzeugt eine dezentrale Kontaktierung zwischen der Führungsnutkontur und dem Eingriffselement 10. Demzufolge bildet sich die Kontaktfläche K zwischen einem dezentralen distalen Endbereich 10.1 des Eingriffselementes 10 und dem Kontaktelement 9 der Führungsnut 2. Vorteilhaft wird hierdurch wiederum eine Drehbewegung des Eingriffselementes 10 um dessen Längsachse Y genauso verursacht, wie ein dezentraler Abrieb des Materiales des Eingriffselementes 10 lediglich in einem distalen Endbereich 10.1 des Eingriffselementes 10. Vorteilhaft wird hierbei jedoch kein unerwünschtes Spiel zwischen den Seitenwandungen 2.1 und 2.3 der Führungsnut 2 und dem Eingriffselement 10 erzeugt.

## Patentansprüche

1. Verschiebeelement (1) zum Verschieben eines Nockensegmentes (31) entlang einer Wellenlängsachse eines Wellensegmentes (35) einer Nockenwelle (30), wobei das Verschiebeelement (1) eine Führungsnut (2) zur Führung eines Eingriffselementes (10) aufweist, welche sich zumindest abschnittsweise entlang einer äußeren Umfangsfläche des Verschiebeelementes (1) erstreckt, **dadurch gekennzeichnet, dass** die Führungsnut (2) wenigstens einen Bewirkungsabschnitt (8, 8.1, 8.2, 8.3) zum Bewirken einer Drehbewegung des Eingriffselementes (10) um dessen Drehachse (Y), welche sich orthogonal zu einer Drehachse (X) des Verschiebeelementes (1) erstreckt, aufweist, und wobei der Bewirkungsabschnitt (8, 8.1, 8.2, 8.3) ein Kontaktelement (9) zur exzentrischen Kontaktierung des Eingriffselementes (10) aufweist.

2. Verschiebeelement (1) gemäß Anspruch 1,
**dadurch gekennzeichnet, dass**
der Bewirkungsabschnitt (8, 8.2) zumindest abschnittsweise in einem Eintrittssektor (4) der Führungsnut (2), in welchem das Eingriffselement (20) in die Führungsnut (2) einbringbar ist, ausgebildet ist.

3. Verschiebeelement (1) gemäß einem der vorangegangenen Ansprüche 1 oder 2,
**dadurch gekennzeichnet, dass**
der Bewirkungsabschnitt (8.3) zumindest abschnittsweise in einem Verstellsektor (5) der Führungsnut (2), in welchem die Führungsnut (2) eine Abweichung der Verlaufsrichtung aufweist, ausgebildet ist.

4. Verschiebeelement (1) gemäß einem der vorangegangenen Ansprüche,
**dadurch gekennzeichnet, dass**
der Bewirkungsabschnitt (8, 8.1) zumindest abschnittsweise in einem Einlaufsektors (3) der Führungsnut (2), in welchem eine kontinuierliche Erhöhung einer Nutgrundtiefe der Führungsnut (2) erfolgt, ausgebildet ist.

5. Verschiebeelement (1) gemäß einem der vorangegangenen Ansprüche,
**dadurch gekennzeichnet, dass**
die Führungsnut (2) eine U-förmige Führungsnutkontur aufweist, wobei das Kontaktelement (9) an einer Wandung(2.1, 2.2, 2.3) der Führungsnut (2) ausgebildet ist.

6. Verschiebeelement (1) gemäß einem der vorangegangenen Ansprüche,
**dadurch gekennzeichnet, dass**
das Kontaktelement (9) eine Materialaufwerfung ist, welche sich zumindest abschnittsweise asymmetrisch zum Führungsnutgrund (2.1)innerhalb einer Führungsnutkontur der Führungsnut (2) erstreckt.

7. Verschiebeelement (1) gemäß einem der vorangegangenen Ansprüche,
**dadurch gekennzeichnet, dass**
die Führungsnut (2) Y-förmig, S-förmig, doppel-S-förmig oder XS-förmig ausgebildet ist.

8. Verschiebeelement (1) gemäß einem der vorangegangenen Ansprüche,
**dadurch gekennzeichnet, dass**
das Verschiebeelement (1) mittels einer Führungshülse (34) mit dem Nockensegment (31) wirkverbunden ist.

9. Verschiebesystem (100) zum Verschieben eines Nockensegmentes (31) einer Nockenwelle (30), wobei das Verschiebesystem (100) wenigstens ein Verschiebelement (1) gemäß einem der vorangegangenen Ansprüche sowie ein Eingriffselement (10) zum Eingreifen in die Führungsnut (2) des Verschiebelementes (1) aufweist, wobei das Eingriffselement (10) um dessen Längsachse drehbar ausgestaltet ist.

10. Nockenwelle (30) zum Betätigen von Ventilen einer Brennkraftmaschine, aufweisend wenigstens ein Wellensegment (35), ein entlang einer Wellenlängsachse des Wellensegmentes (35) verschiebbares Nockensegment (31) und ein Verschiebeelement (1) zum Verschieben des Nockensegmentes (31), wobei
das Verschiebeelement (1) eine Führungsnut (2) zur Aufnahme eines Eingriffselementes (10) aufweist, welche sich zumindest abschnittsweise entlang einer äußeren Umfangsfläche des Verschiebeelementes (1) erstreckt, wobei die Führungsnut (2) einen Bewirkungsabschnitt (8, 8.1, 8.2, 8.3) zum Bewirken einer Drehbewegung des Eingriffselementes (10) um dessen Drehachse (Y), welche sich orthogonal zu einer Drehachse (X) des Verschiebeelementes (1) erstreckt, aufweist, und wobei
der Bewirkungsabschnitt (8, 8.1, 8.2, 8.3) eine Kontaktfläche (K) zur exzentrischen Kontaktierung des Eingriffselementes (10) aufweist.

## Claims

1. Shifting element (1) for shifting a cam segment (31) along a shaft longitudinal axis of a shaft segment (35) of a cam shaft (30), wherein
the shifting element (1) has a guide groove (2) for guiding an engagement element (10), which extends along an outer peripheral surface of the shifting element (1) at least in sections, **characterized in that** the guide groove (2) has at least one effective section (8, 8.1, 8.2, 8.3) for bringing about a rotational movement of the engagement element (10) about its rotational axis (Y), which extends orthogonally to a rotational axis (X) of the shifting element (1), and wherein the effective section (8, 8.1, 8.2, 8.3) has a contact element (9) for the eccentric contacting of the engagement element (10).

2. Shifting element (1) according to Claim 1,
**characterized in that**
the effective section (8, 8.2) at least in sections is formed in an inserting sector (4) of the guide groove (2), in which the engagement element (20) is adapted to be engaged with the guide groove (2).

3. Shifting element (1) according to one of the preceding Claims 1 or 2,
**characterized in that**
the effective section (8.3) at least in sections is designed in an adjusting sector (5) of the guide groove (2), in which the guide groove (2) has a deviation from the direction of travel.

4. Shifting element (1) according to one of the preceding claims,
**characterized in that**
the effective section (8, 8.1) at least in sections is formed in an entry sector (3) of the guide groove (2), in which a continuous increasing of a groove bottom depth of the guide groove (2) occurs.

5. Shifting element (1) according to one of the preceding claims,
**characterized in that**
the guide groove (2) has a U-shaped guide groove contour, the contact element (9) being formed on one wall (2.1, 2.2, 2.3) of the guide groove (2).

6. Shifting element (1) according to one of the preceding claims,
**characterized in that**
the contact element (9) is a material raising, which extends at least in sections asymmetrically to the guide groove bottom (2.1) within a guide groove contour of the guide groove (2).

7. Shifting element (1) according to one of the preceding claims,
**characterized in that**
the guide groove (2) is Y-shaped, S-shaped, double S-shaped or XS-shaped.

8. Shifting element (1) according to one of the preceding claims,
**characterized in that**
the shifting element (1) is operatively connected to the cam segment (31) by means of a guide sleeve (34).

9. Shifting system (100) for shifting a cam segment (31) of a cam shaft (30), wherein the shifting system (100) comprises at least one shifting element (1) according to one of the preceding claims, as well as an engagement element (10) for engaging with the guide groove (2) of the shifting element (1), wherein the engagement element (10) is designed to be rotatable about its longitudinal axis.

10. Cam shaft (30) for actuating valves of an internal combustion engine, comprising at least one shaft segment (35), a cam segment (31) which is adapted to be shifted along a shaft longitudinal axis of the shaft segment (35) and a shifting element (1) for shifting the cam segment (31), wherein
the shifting element (1) has a guide groove (2) for receiving an engagement element (10), which extends along an outer peripheral surface of the shifting element (1) at least in sections, wherein the guide groove (2) has an effective section (8, 8.1, 8.2, 8.3) for bringing about a rotational movement of the engagement element (10) about its rotational axis (Y), which extends orthogonally to a rotational axis (X) of the shifting element (1), and wherein
the effective section (8, 8.1, 8.2, 8.3) has a contact surface (K) for the eccentric contacting of the engagement element (10).

## Revendications

1. Élément de déplacement (1) servant à déplacer un segment de came (31) le long d'un axe longitudinal d'arbre d'un segment (35) d'un arbre à cames (30), dans lequel l'élément de déplacement (1) comprend une rainure de guidage (2) servant au guidage d'un élément d'entrée en prise (10), lequel s'étend au moins dans certaines régions le long d'une surface périphérique extérieure de l'élément de déplacement (1), **caractérisé en ce que** la rainure de guidage (2) comprend au moins une partie d'actionnement (8, 8.1, 8.2, 8.3) servant à produire un mouvement rotatif de l'élément d'entrée en prise (10) autour de son axe de rotation (Y), lequel s'étend perpendiculairement à un axe de rotation (X) de l'élément de déplacement (1), et la partie d'actionnement (8, 8.1, 8.2, 8.3) comprenant un élément de contact (9) servant à la mise en contact excentrique avec l'élément d'entrée en prise (10).

2. Élément de déplacement (1) selon la revendication 1,
**caractérisé en ce que**
la partie d'actionnement (8, 8.2) est formée au moins dans certaines régions dans un secteur d'introduction (4) de la rainure de guidage (2), dans lequel l'élément d'entrée en prise (20) peut être inséré dans la rainure de guidage (2).

3. Élément de déplacement (1) selon l'une des revendications précédentes 1 et 2,
**caractérisé en ce que**
la partie d'actionnement (8.3) est formée au moins dans certaines régions dans un secteur de réglage (5) de la rainure de guidage (2), dans lequel la rainure de guidage (2) présente une déviation par rapport à la direction d'étendue.

4. Élément de déplacement (1) selon l'une des revendications précédentes,
**caractérisé en ce que**
la partie d'actionnement (8, 8.1) est formée au moins dans certaines régions dans un secteur d'entrée (3) de la rainure de guidage (2), dans lequel a lieu une augmentation continue d'une profondeur de fond de rainure de la rainure de guidage (2).

5. Élément de déplacement (1) selon l'une des revendications précédentes,
**caractérisé en ce que**
la rainure de guidage (2) présente un contour de rainure de guidage en forme de U, l'élément de contact (9) étant formé sur une paroi (2.1, 2.2, 2.3) de la rainure de guidage (2).

6. Élément de déplacement (1) selon l'une des revendications précédentes,
**caractérisé en ce que**
l'élément de contact (9) est une élévation de matière, laquelle s'étend, au moins dans certaines régions, de manière asymétrique par rapport au fond de rainure de guidage (2.1) à l'intérieur d'un contour de la rainure de guidage (2).

7. Élément de déplacement (1) selon l'une des revendications précédentes,
**caractérisé en ce que**
la rainure de guidage (2) est en forme de Y, en forme de S, en forme de double S ou en forme de XS.

8. Élément de déplacement (1) selon l'une des revendications précédentes,
**caractérisé en ce que**
l'élément de déplacement (1) est relié fonctionnellement au segment de came (31) au moyen d'une douille de guidage (34).

9. Système de déplacement (100) servant à déplacer un segment de came (31) d'un arbre à cames (30), dans lequel le système de déplacement (100) comprend au moins un élément de déplacement (1) selon l'une des revendications précédentes ainsi qu'un élément d'entrée en prise (10) destiné à venir en prise dans la rainure de guidage (2) de l'élément de déplacement (1), dans lequel l'élément d'entrée en prise (10) est conçu de manière à pouvoir tourner autour de son axe longitudinal.

10. Arbre à cames (30) servant à l'actionnement de soupapes d'un moteur à combustion interne, comprenant au moins un segment d'arbre (35), un segment de came (31) déplaçable le long d'un axe longitudinal d'arbre du segment d'arbre (35) et un élément de déplacement (1) servant à déplacer le segment de came (31), dans lequel l'élément de déplacement (1) comprend une rainure de guidage (2) servant à recevoir un élément d'entrée en prise (10), lequel s'étend au moins dans certaines régions le long d'une surface périphérique extérieure de l'élément de déplacement (1), dans lequel la rainure de guidage (2) comprend une partie d'actionnement (8, 8.1, 8.2, 8.3) servant à produire un mouvement rotatif de l'élément d'entrée en prise (10) autour de son axe de rotation (Y), lequel s'étend perpendiculairement à un axe de rotation (X) de l'élément de déplacement (1), et dans lequel la partie d'actionnement (8, 8.1, 8.2, 8.3) comprend une surface de contact (K) servant à la mise en contact excentrique avec l'élément d'entrée en prise (10).
